(19) Europäisches Patentamt
European Patent Office
Office européen des brevets

(11) **EP 3 479 927 A1**

(12) **EUROPÄISCHE PATENTANMELDUNG**

(43) Veröffentlichungstag:
**08.05.2019 Patentblatt 2019/19**

(21) Anmeldenummer: **17200340.2**

(22) Anmeldetag: **07.11.2017**

(51) Int Cl.:
*B22F 1/00* (2006.01)    *B22F 3/105* (2006.01)
*B33Y 70/00* (2015.01)    *B29C 64/165* (2017.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Heraeus Additive Manufacturing GmbH**
**63450 Hanau (DE)**

(72) Erfinder: **Bauereiß, Andreas**
**63452 Hanau (DE)**

(54) **VERWENDUNG EINER WÄSSRIGEN ZUSAMMENSETZUNG FÜR DIE ADDITIVE FERTIGUNG EINES METALLISCHEN FORMKÖRPERS**

(57)    Die vorliegende Erfindung betrifft die Verwendung einer wässrigen Zusammensetzung, die ein Metallpulver und ein Feuchthaltemittel enthält, für die additive Fertigung eines metallischen Formkörpers durch Strahlschmelzen oder -sintern.

EP 3 479 927 A1

**Beschreibung**

Additive Fertigungsverfahren arbeiten werkzeuglos und ohne Form. Das Volumen eines Objekts wird dabei schichtweise gemäß einem digitalen Computermodell aufgebaut.

Auch metallische Formkörper lassen sich über eine additive Fertigung herstellen. Beispielsweise erfolgt die additive Fertigung über ein Strahlschmelzen oder Strahlsintern eines Metallpulvers (Pulverbett-basierte Verfahren). Als Strahlquellen werden Laser- oder Elektronenstrahlen verwendet (selektives Laserstrahlschmelzen oder -sintern, selektives Elektronenstrahlschmelzen oder -sintern).

Beim selektiven Laserschmelzen wird der zu verarbeitende Werkstoff in Pulverform in einer dünnen Schicht auf der Bauplatte oder einer bereits zuvor abgeschiedenen Werkstoffschicht aufgebracht. Der pulverförmige Werkstoff wird mittels Laserstrahlung lokal vollständig geschmolzen und bildet nach der Erstarrung eine feste Materialschicht. Anschließend wird die Bauplatte um den Betrag einer Schichtdicke abgesenkt und erneut Pulver aufgetragen. Dieser Zyklus wird solange wiederholt, bis der fertige Formkörper erhalten wird. Beim selektiven Elektronenstrahlschmelzen erfolgt das lokale Aufschmelzen des Pulvers durch einen Elektronenstrahl.

WO 98/24574 A1 beschreibt ein Verfahren zur Herstellung eines Formkörpers durch ein selektives Lasersintern bzw. Laserschmelzen, wobei ein metallisches Werkstoffpulver aufgebracht und durch den Laserstrahl aufgeschmolzen wird, der Laserstrahl in mehreren Spuren über den vorgegebenen Bereich der Werkstoffpulverschicht so geführt wird, dass jede folgende Spur des Laserstrahls die vorherige Spur teilweise überlappt und eine Schutzgasatmosphäre über der Wechselwirkungszone von Laserstrahl mit dem metallischen Werkstoffpulver aufrechterhalten wird.

Den aktuellen Stand der additiven Fertigung von metallischen Formkörpern, z.B. durch Laserstrahl- und Elektronenstrahlschmelzen von schichtweise aufgetragenem Metallpulver, beschreiben beispielsweise D. Herzog et al., Acta Materialia, 117 (2016), S. 371-392. M. Markl et al., Schweißen und Schneiden, 69 (2017), Heft 1-2, S. 30-39 beschreiben die additive Fertigung durch selektives Elektronenstrahlschmelzen.

Die Pulverbett-basierten Verfahren unter Verwendung von Metallpulvern weisen gewisse Nachteile auf.

Da Metallpulver aufgrund ihrer hohen Oberfläche sehr reaktiv sein können, ergeben sich erhöhte Anforderungen an ihre sichere Handhabung.

Manche metallischen Pulver weisen gegenüber gängigen Lasertypen eine geringe Absorption auf, was die Verwendung leistungsstärkerer Laser erforderlich macht. Wie von M. Naeem, Laser Technik Journal, Volume 10, Januar 2013, S. 18-20, und in US 2015/0102016 A1 beschrieben, weisen insbesondere Kupfer, Gold, Silber oder Aluminium gegenüber gängigen Lasern, die mit einer Wellenlänge im Infrarotbereich arbeiten, eine sehr geringe Absorption auf.

Beim Elektronenstrahlschmelzen müssen die Pulverpartikel des Pulverbetts miteinander in elektrischem Kontakt stehen, um statische Aufladungen und daraus resultierende Pulverexplosionen zu vermeiden.

WO 2017/037165 A1 beschreibt ein additives Fertigungsverfahren durch ein selektives Laserschmelzen oder -sintern, wobei der zu schmelzende bzw. zu versinternde Pulverwerkstoff schichtweise in Form einer Suspension aufgetragen wird. Als geeignete metallische Werkstoffe für dieses Verfahren werden Titan und Wolfram erwähnt. Bevorzugt wird ein Schutzgas über die in Form eines Films aufgebrachte Metallpulver-haltige Suspension geleitet. Durch diesen Gasstrom kann es jedoch zu einer vorzeitigen Verdunstung der Suspensionsflüssigkeit kommen, noch bevor der selektive Schmelz- oder Sinterschritt abgeschlossen ist. Dies führt zu einem unkontrollierten Feuchtegrad des Gemischs und erfordert eine ausreichend schnelle Verarbeitung der Metallpulversuspension im Bauraum, da ansonsten wieder ein trocknes Pulverbett mit den oben beschriebenen Nachteilen vorliegt.

Eine Aufgabe der vorliegenden Erfindung ist die Bereitstellung eines additiven Fertigungsverfahrens durch ein Strahlschmelzen bzw. -sintern, das die oben genannten Nachteile eines Pulverbettverfahrens, insbesondere die erhöhten Sicherheitsanforderungen aufgrund reaktiver Metallpulver, vermeidet, auch für Metalle mit geringer Laserstrahlabsorption effektiv durchgeführt werden kann und eine erhöhte zeitliche Flexibilität bei der Durchführung der Verfahrensschritte ermöglicht. Weiterhin sollte das Metallpulver ein gutes Aufschmelzverhalten zeigen (z.B. in Form einer guten Benetzung des Substrats durch das aufgeschmolzene Metallpulver).

Gelöst wird die Aufgabe durch die Verwendung einer wässrigen Zusammensetzung, die ein Metallpulver und ein Feuchthaltemittel enthält, für die additive Fertigung eines metallischen Formkörpers durch Strahlschmelzen oder -sintern.

Da das Metallpulver nicht in trockenem Zustand, sondern in Form einer wässrigen Zusammensetzung verwendet wird, entfallen die erhöhten Sicherheitsanforderungen. Durch die Anwesenheit des Feuchthaltemittels in der wässrigen Zusammensetzung wird ein vorzeitiges Austrocknen vermieden. Der Feuchtegehalt der Zusammensetzung kann auch nach ihrem Einbringen in den Bauraum über einen längeren Zeitraum relativ konstant gehalten werden und erhöht somit die zeitliche Flexibilität bei der Durchführung der additiven Fertigung. Wie die Beispiele der vorliegenden Erfindung belegen, führt die Anwesenheit eines Feuchthaltemittels sowohl im Vergleich mit einem wässrigen Medium, das kein Feuchthaltemittel enthält, als auch im Vergleich mit einem trockenen Metallpulver zu einem effizienteren Aufschmelzen des Metallpulvers.

Wie dem Fachmann bekannt ist, handelt es sich bei der additiven Fertigung um ein Verfahren, bei dem der Formkörper auf Basis digitaler 3D-Daten schichtweise aufgebaut wird. Im Rahmen der vorliegenden Erfindung ist das Strahlschmelzen oder -sintern bevorzugt ein Laserstrahlschmelzen oder - sintern oder ein Elektronenstrahlschmelzen oder -sintern.

Feuchthaltemittel sind dem Fachmann bekannt, beispielsweise aus dem Bereich der kosmetischen Zubereitungen. Bevorzugt ist das Feuchthaltemittel ein Polyol bzw. eine Polyhydroxyverbindung (d.h. eine Verbindung, die mindestens zwei Hydroxy-Gruppen aufweist), eine Mono- oder Polyalkoxyverbindung (d.h. eine Verbindung, die eine oder mehrere Alkoxy-Gruppen aufweist) oder eine Aminosäure oder ein Gemisch aus mindestens zwei dieser Verbindungen.

Beispielsweise ist die Polyhydroxyverbindung Glycerin, ein Glycol (z.B. Ethylenglycol, Propylenglycol, Butylenglycol), ein Zuckeralkohol (z.B. Sorbitol, Mannitol, Glucitol, Isomalt, Lactit, Xylit, Threit, Erythrit oder Arabit), ein Polyalkylenglycol (z.B. Diethylenglycol, Dipropylenglycol, ein Polyalkylenglycol mit einem zahlengemittelten Molekulargewicht von $\leq 5000$ g/mol, bevorzugter $\leq 2000$ g/mol, noch bevorzugter $\leq 500$ g/mol), ein Oligo- oder Polysaccharid oder ein Gemisch aus mindestens zwei dieser Verbindungen.

Das Polyalkylenglycol ist beispielsweise ein Polyethylenglycol oder ein Polypropylenglycol. Bevorzugt weist das Polyalkylenglycol ein zahlengemitteltes Molekulargewicht von $\leq 5000$ g/mol, bevorzugter $\leq 2000$ g/mol, noch bevorzugter $\leq 500$ g/mol auf.

Die Bestimmung des zahlengemittelten Molekulargewichts kann beispielsweise durch nasschemische OH-Zahlbestimmung nach DIN 53 240 oder entsprechend der in der US 2010/0240864 A1 beschriebenen Methode erfolgen.

Das Oligo- oder Polysaccharid ist beispielsweise ein Galaktose-haltiges Polysaccharid (z.B. Agarose, Agar).

Die Mono- oder Polyalkoxy-Verbindung kann beispielsweise eine Monohydroxy-Verbindung oder auch eine OH-freie Verbindung sein. Die Polyalkoxy-Verbindung enthält bevorzugt eine oder mehrere Ethoxy- und/oder Propoxy-Gruppen. Die Alkoxy-Gruppen können beispielsweise als terminale Gruppen vorliegen. Zwei oder mehr Alkoxy-Gruppen können unmittelbar aufeinander folgend in der Verbindung vorliegen. Die Mono- oder Polyalkoxy-Verbindung wird beispielsweise erhalten, indem eine oder mehrere Hydroxy-Gruppen in einer der oben genannten PolyhydroxyVerbindungen alkoxyliert (z.B. ethoxyliert und/oder propoxyliert) werden, so dass eine alkoxylierte Mono-Hydroxy-Verbindung oder eine alkoxylierte Hydroxy-freie Verbindung vorliegt.

Bezogen auf das Wasser der wässrigen Zusammensetzung liegt das Feuchthaltemittel beispielsweise in einem Anteil von 0,1 bis 60Vol%, bevorzugter 0,5-50 Vol% vor. Das Volumen des zugegebenen Feuchthaltemittels kann unmittelbar gemessen oder über die Beziehung $V_{Feuchthaltemittel} = m_{Feuchthaltemittel} / \rho_{Feuchthaltemittel}$ (wobei m die Masse und $\rho$ die Dichte des Feuchthaltemittels sind) bestimmt werden.

Bevorzugt ist das Feuchthaltemittel wasserlöslich. Beispielsweise weist das Feuchthaltemittel bei 25°C eine Löslichkeit in Wasser von mindestens 1 g/l, bevorzugter mindestens 5 g/l, noch bevorzugter mindestens 7 g/l oder sogar mindestens 10 g/l auf.

Durch den Begriff "wässrige Zusammensetzung" wird zum Ausdruck gebracht, dass die Zusammensetzung Wasser enthält. Der Wassergehalt und damit auch die Konsistenz der wässrigen Zusammensetzung kann über einen breiten Bereich variiert werden. Bei relativ hohem Wassergehalt liegt die wässrige Zusammensetzung als Suspension mit sehr hoher Fließfähigkeit vor, während die Zusammensetzung bei relativ niedrigem Wassergehalt eher eine klumpige oder pastenförmige Konsistenz aufweist. Beispielsweise enthält die wässrige Zusammensetzung Wasser in einer Menge von 1 Vol% bis 50 Vol%, bevorzugter 2 Vol% bis 45 Vol% oder 3 Vol% bis 40 Vol%.

Wie nachfolgend noch eingehender beschrieben wird, kann die wässrige Zusammensetzung bereits beim Einbringen in den Bauraum der Strahlschmelzvorrichtung oder beim schichtförmigen Aufbringen auf das Substrat Wasser enthalten. Alternativ ist es auch möglich, zunächst ein trockenes Metallpulver schichtförmig auf das Substrat im Bauraum (d.h. die Bauplatte oder eine bereits zuvor aufgetragene Metallschicht) aufzubringen und dieser trockenen Metallpulverschicht dann Wasser in der gewünschten Menge zuzuführen, wobei das Feuchthaltemittel beispielsweise in diesem nachträglich zugeführten Wasser vorliegt. Gemäß einer weiteren Alternative ist es auch möglich, eine wässrige Zusammensetzung, die einen relativ hohen Wassergehalt aufweist, schichtförmig auf das Substrat im Bauraum aufzubringen und anschließend durch eine geeignete Maßnahme den Wassergehalt der Schicht zu reduzieren, bevor das selektive Aufschmelzen oder Sintern durch die Strahlquelle stattfindet.

Hinsichtlich der Metalle, die im Rahmen der vorliegenden Erfindung verwendet werden können, gibt es keine Beschränkungen. Beispielsweise ist das Metall ein Edelmetall (z.B. Gold, Silber, Platin, Palladium, Ruthenium, Rhodium oder Iridium), ein Halbedelmetall (insbesondere Kupfer), ein Refraktärmetall (z.B. Titan) oder ein Leichtmetall (z.B. Aluminium oder Magnesium). Das Metall kann in elementarer Form, in Form einer Legierung oder einer intermetallischen Phase vorliegen. Unter dem Begriff "Legierung eines Metalls" wird eine Legierung verstanden, die dieses Metall als Hauptkomponente (z.B. in einem Anteil von mehr 50 at%) und daneben ein oder mehrere Legierungselemente enthält. Refraktärmetalle sind unedle Metalle der 4. Nebengruppe (Titan, Zirconium, Hafnium), 5. Nebengruppe (Vanadium, Niob, Tantal) und 6. Nebengruppe (Chrom, Molybdän, Wolfram), wobei deren Schmelzpunkt bevorzugt oberhalb des Schmelzpunktes von Platin liegt.

Wie oben bereits erwähnt, weisen insbesondere Kupfer, Gold, Silber oder Aluminium oder eine Legierung oder intermetallische Phase eines dieser Metalle gegenüber Laserstrahlen mit einer Wellenlänge im IR-Bereich eine sehr geringe Absorption auf. Im Rahmen der vorliegenden Erfindung wurde überraschend festgestellt, dass sich unter Verwendung der erfindungsgemäßen wässrigen Zusammensetzung auch diese Metalle oder ihre Legierungen oder intermetallische Phasen sehr gut in einem Laserschmelz- oder Lasersinterverfahren zu einem metallischen Formkörper verarbeiten lassen.

Geeignete Partikelgrößen eines Metallpulvers im Rahmen eines additiven Fertigungsverfahrens sind dem Fachmann bekannt oder können gegebenenfalls durch Routineversuche bestimmt werden. Beispielsweise weist das Metallpulver einen massebezogenen $d_{50}$-Wert im Bereich von 10 $\mu$m bis 200 $\mu$m auf. Die Bestimmung des $d_{50}$-Werts erfolgt beispielsweise durch Laserbeugung.

Geeignete Metallpulver sind kommerziell erhältlich oder lassen sich über Verfahren, die dem Fachmann bekannt sind, herstellen.

In einer bevorzugten Ausführungsform enthält die die wässrige Zusammensetzung außerdem ein Flussmittel.

Wie dem Fachmann bekannt ist, werden Flussmittel üblicherweise beim Löten von Metallen eingesetzt. Im Rahmen der vorliegenden Erfindung wurde überraschend erkannt, dass die Anwesenheit eines Flussmittels in der wässrigen Zusammensetzung zu einer weiteren Verbesserung des Aufschmelzverhaltens des Metallpulvers unter Einwirkung der Strahlquelle führen kann.

Geeignete Flussmittel sind beispielsweise solche, die in der DIN EN 1045:1997 als Flussmittel zum Hartlöten genannt werden. Beispielsweise ist das Flussmittel eine Bor-haltige Verbindung, ein Phosphat, ein Silikat, ein borfreies Chlorid oder Fluorid (z.B. ein Alkalimetall-, Erdalkalimetall- oder Ammoniumfluorid oder -chlorid).

Als Bor-haltige Verbindung können beispielsweise Borsäure, Boroxide (z.B. $B_2O_3$), Borate (z.B. Alkalimetall-, Erdalkalimetall- oder Ammoniumborate) oder Fluoroborate (z.B. Alkalimetall-, Erdalkalimetall- oder Ammoniumfluoroborate) genannt werden. Das Borat ist beispielsweise ein Metaborat oder ein Tetraborat.

Bezogen auf die Summe der Volumia des Wasser und des Feuchthaltemittels (d.h. $V_{H2O}$ + $V_{Feuchthaltemittel}$) liegt das Flussmittel beispielsweise in einem Anteil von 0,5 bis 50 Vol% vor.

Das Strahlschmelzen oder Strahlsintern ist bevorzugt ein Laserstrahlschmelzen, ein Laserstrahlsintern oder ein Elektronenstrahlschmelzen oder -sintern. Diese Verfahren werden häufig auch mit dem Zusatz "selektiv" versehen, also z.B. selektives Laserstrahlschmelzen, um zum Ausdruck zu bringen, dass der Energieeintrag der Strahlquelle auf Basis des Computermodells nur in vordefinierten Bereichen der aufgetragenen Schichten erfolgt.

Die vorliegende Erfindung betrifft außerdem ein Verfahren zur additiven Fertigung eines metallischen Formkörpers durch ein Strahlschmelzen oder Strahlsintern, umfassend

(i) Bereitstellen der oben beschriebenen wässrigen Zusammensetzung in Form einer Schicht S1 auf einem Substrat,
(ii) selektives Aufschmelzen oder Sintern des Metallpulvers in der Schicht S1 durch eine Strahlquelle,
(iii) nach dem Erstarren des aufgeschmolzenen oder gesinterten Metallpulvers Bereitstellen der oben beschriebenen wässrigen Zusammensetzung in Form einer weiteren Schicht S2 auf der zuvor bereitgestellten Schicht S1,
(iv) selektives Aufschmelzen oder Sintern des Metallpulvers in der weiteren Schicht S2 durch die Strahlquelle.

Bei dem Strahlschmelzen oder Strahlsintern handelt es sich bevorzugt um ein Laserstrahlschmelzen oder -sintern oder ein Elektronenstrahlschmelzen oder -sintern. In diesen Fällen ist die Strahlquelle also bevorzugt ein Laserstrahl oder ein Elektronenstrahl.

Bei dem Substrat kann es sich um die noch unbeschichtete Bauplatte der Strahlschmelz- bzw. -sintervorrichtung oder alternativ um zuvor bereits auf der Bauplatte abgeschiedene Materialschichten des herzustellenden Formkörpers handeln.

Das Bereitstellen der wässrigen Zusammensetzung in Form einer Schicht auf dem Substrat kann beispielsweise erfolgen, indem die wässrige Zusammensetzung unter Verwendung üblicher, dem Fachmann bekannter Hilfsmittel auf dem Substrat aufgebracht wird. Das schichtförmige Aufbringen der wässrigen Zusammensetzung erfolgt beispielsweise durch ein Rakel, eine Walze, eine Presse oder durch Siebdruck oder eine Kombination aus mindestens zwei dieser Methoden.

Nach dem Aufbringen der wässrigen Zusammensetzung kann ohne weitere Zwischenschritte der Schritt (ii) erfolgen.

Alternativ ist es auch möglich, dass nach dem Aufbringen auf das Substrat der Wassergehalt der wässrigen Zusammensetzung durch eine geeignete Maßnahme (z.B. durch Behandlung mit der Strahlquelle, so dass ein Teil des Wassers verdampft, wobei ein Aufschmelzen oder Sintern des Metallpulvers jedoch bevorzugt noch nicht stattfindet) reduziert wird, bevor der Schritt (ii) erfolgt.

Im Rahmen der vorliegenden Erfindung kann das Bereitstellen der wässrigen Zusammensetzung in Form einer Schicht auf dem Substrat beispielsweise auch dadurch erfolgen, dass zunächst ein trockenes Metallpulver auf dem Substrat schichtförmig aufgebracht wird und das Wasser anschließend dieser trockenen Pulverschicht zugeführt wird. Die kann beispielsweise durch eine Befeuchtungseinheit (z.B. in Form einer oder mehrerer Düsen) erfolgen, die das Pulver benebelt oder besprüht. Das Feuchthaltemittel kann beispielsweise in dem anschließend zugeführten Wasser vorliegen (z.B. im Wasser gelöst oder dispergiert). Sofern ein festes Feuchthaltemittel wie z.B. ein Polysaccharid verwendet wird, kann dieses beispielsweise bereits zusammen mit dem trockenen Metallpulver schichtförmig auf dem Substrat aufgebracht werden oder in dem anschließend zugeführten Wasser vorliegen. Das Aufbringen der trockenen Pulverschicht kann mit den gleichen Mitteln wie das Aufbringen der wässrigen Zusammensetzung erfolgen, also z.B. einem Rakel, einer Walze oder einer Presse.

Ein Metallpulver besteht allgemein aus Metallpulverpartikeln, zwischen denen interpartikuläre Hohlräume vorliegen. Bei einem trockenen Pulver sind diese interpartikulären Hohlräume vollständig mit einem Gas gefüllt. Handelt es sich um ein nasses oder feuchtes Pulver, können die interpartikulären Hohlräume teilweise oder sogar vollständig mit der anwesenden Flüssigkeit gefüllt sein.

In der in Schritt (i) bereitgestellten Schicht S1 der wässrigen Zusammensetzung können die zwischen den Metallpulverpartikeln vorliegenden Hohlräume vollständig mit Wasser, dem Feuchthaltemittel und optionalen Additiven (wie z.B. dem Flussmittel) ausgefüllt sein. In einer bevorzugten Ausführungsform sind die zwischen den Metallpulverpartikeln vorliegenden Hohlräume jedoch zu Beginn des Schritts (ii) teilweise mit einem Gas gefüllt. Dabei handelt es sich beispielsweise um das inerte Schutzgas (z.B. Stickstoff oder ein Edelgas), in dessen Anwesenheit das additive Fertigungsverfahren durchgeführt wird. Wenn in der Schicht S1 die zwischen den Metallpulverpartikeln vorliegenden Hohlräume zu Beginn des Schritts (ii) teilweise mit einem Gas (z.B. dem Schutzgas des additiven Fertigungsverfahrens) gefüllt sind, kann eine weitere Verbesserung des Aufschmelzverhaltens des Metallpulvers erzielt werden.

Durch die relativen Volumenanteile des Wassers, des Feuchthaltemittels und optionaler Additive (wie z.B. dem Flussmittel) lässt sich steuern, ob die zwischen den Metallpulverpartikeln vorliegenden Hohlräume vollständig durch diese Komponenten ausgefüllt sind oder noch ein Restvolumen in diesen interpartikulären Hohlräumen verbleibt, das mit einem Gas (z.B. dem inerten Schutzgas) ausgefüllt werden kann.

Das Gesamtvolumen der auf dem Substrat bereitgestellten Schicht S1 (d.h. $V_{Schicht\,S1}$) ergibt sich aus der Summe der Volumen der Einzelkomponenten, d.h.

- dem Volumen des Wassers $V_{H2O}$,
- dem Volumen des Metallpulvers $V_{Metall}$,
- dem Volumen des Feuchthaltemittels $V_{Feuchthaltemittel}$,
- sofern anwesend, dem Volumen einer oder mehrerer Additive $V_{Additiv}$,
- sofern anwesend, dem Volumen des Gases $V_{Gas}$.

Das Volumen einer zugegebenen Komponente lässt sich messen oder gegebenenfalls über die Beziehung V = m / $\rho$ bestimmen, wobei m die Masse und $\rho$ die Dichte der jeweiligen Komponente ist.

Das Volumen der auf dem Substrat bereitgestellten Schicht S1 lässt sich also durch folgende Beziehung ausdrücken:

$$V_{Schicht\,S1} = \frac{m_{H_2O}}{\rho_{H_2O}} + \frac{m_{Feuchthaltemittel}}{\rho_{Feuchthaltemittel}} + \frac{m_{Additiv}}{\rho_{Additiv}} + V_{Gas} + \frac{m_{Metall}}{\rho_{Metall}}$$

In einer bevorzugten Ausführungsform ist daher zu Beginn des Schritts (ii) $V_{Gas}$ > 0 (d.h. die zwischen den Metallpulverpartikeln vorliegenden interpartikulären Hohlräume sind zu Beginn des Schritts (ii) teilweise mit einem Gas gefüllt).

Beispielsweise genügt die auf dem Substrat bereitgestellte Schicht S1 zu Beginn des Schritts (ii) der folgenden Bedingung:

$$V_{Gas} / V_{Schicht\,S1} > 0{,}04.$$

Noch bevorzugter ist $V_{Gas} / V_{Schicht\,S1}$ > 0,06 oder sogar > 0,08. In einer bevorzugten Ausführungsform gilt:

$$0{,}40 > V_{Gas} / V_{Schicht\,S1} > 0{,}04$$

Noch bevorzugter gilt:

$$0{,}35 > V_{Gas} / V_{Schicht\,S1} > 0{,}06$$

oder

$$0,30 > V_{Gas} / V_{Schicht\ S1} > 0,08.$$

Weiterhin kann es bevorzugt sein, wenn die auf dem Substrat bereitgestellte Schicht S1 zu Beginn des Schritts (ii) der folgenden Bedingung genügt:

$$0,001 \leq R \leq 0,50$$

wobei

$$R = (V_{H2O} + V_{Additiv}) / V_{Schicht\ S1}$$

Aufgrund der Beziehung V = m / ρ (wobei m die Masse und ρ die Dichte der jeweiligen Komponente sind), lässt sich der Parameter R auch durch folgende Beziehung wiedergeben:

$$R = \frac{\dfrac{m_{H_2O}}{\rho_{H_2O}} + \dfrac{m_{Additiv}}{\rho_{Additiv}}}{V_{Schicht\ S1}}$$

Bevorzugter gilt:

$$0,01 \leq R \leq 0,45;$$

noch bevorzugter gilt:

$$0,05 \leq R \leq 0,40.$$

In Schritt (ii) erfolgt das selektive Aufschmelzen oder Sintern des Metallpulvers in der durch die wässrige Zusammensetzung gebildeten Schicht S1 durch eine Strahlquelle. Ob ein Aufschmelzen oder ein Sintern des Metallpulvers erfolgt, lässt sich beispielsweise durch die Strahlungsintensität steuern. Bevorzugt handelt es sich bei der Strahlquelle um einen Laserstrahl oder einen Elektronenstrahl. Mit dem Begriff "selektiv" wird bekanntermaßen zum Ausdruck gebracht, dass im Rahmen der additiven Fertigung eines Formkörpers das Aufschmelzen oder Sintern des Metallpulvers auf Basis digitaler 3D-Daten des Formkörpers nur in definierten, vorgegebenen Bereichen der Schicht stattfindet.

Nach dem Erstarren des aufgeschmolzenen oder gesinterten Metallpulvers erfolgt in Schritt (iii) das Bereitstellen der oben beschriebenen wässrigen Zusammensetzung in Form einer weiteren Schicht S2 auf der zuvor bereitgestellten Schicht S1.

Die Bereitstellung der weiteren Schicht S2 kann auf die gleiche Weise erfolgen wie die Bereitstellung der Schicht S1. Hinsichtlich der bevorzugten Eigenschaften der die Schicht S2 bildenden wässrigen Zusammensetzung kann auf die obigen Ausführungen verwiesen werden.

Das für die Bereitstellung der Schicht S2 verwendete Metall kann mit dem für die Bereitstellung der Schicht S1 verwendeten Metall übereinstimmen. Alternativ ist es jedoch möglich, für die Schicht S2 ein Pulver eines anderen Metalls zu verwenden.

Zwischen Schritt (ii) und Schritt (iii) wird die Bauplatte bevorzugt um einen Betrag abgesenkt, der im Wesentlichen der Schichtdicke der Schicht S1 entspricht. Diese Vorgehensweise im Rahmen der additiven Fertigung eines Formkörpers ist dem Fachmann allgemein bekannt.

Hinsichtlich des selektiven Aufschmelzens oder Sinterns des Metallpulvers in der durch die wässrige Zusammensetzung gebildeten Schicht S2 durch eine Strahlquelle in Schritt (iv) kann auf die obigen Ausführungen zu Schritt (ii) verwiesen werden. Beispielsweise sind auch zu Beginn des Schritts (iv) die zwischen den Metallpulverpartikeln vorliegenden Hohlräume teilweise mit einem Gas (z.B. dem inerten Schutzgas des additiven Fertigungsverfahrens) gefüllt.

Bevorzugt werden die Schritte (i)-(iv) in Anwesenheit eines inerten Schutzgases wie Stickstoff oder einem Edelgas durchgeführt. Durch das inerte Schutzgas wird im Bauraum der Strahlschmelz- bzw. Strahlsintervorrichtung eine Schutzgasatmosphäre ausgebildet, die eine unerwünschte Oxidation des Metalls verhindert.

Die Schritte (iii) und (iv) werden bevorzugt ein- oder mehrmals wiederholt, z.B. bis zur Fertigstellung des metallischen Formkörpers.

Die vorliegende Erfindung betrifft weiterhin eine wässrige Zusammensetzung, die ein Metallpulver und ein Feuchthaltemittel enthält.

Hinsichtlich der bevorzugten Eigenschaften der wässrigen Zusammensetzung und der in ihr vorliegenden Komponenten, insbesondere des Feuchthaltemittels, des Metallpulvers und optionaler Additive (wie z.B. einem Flussmittel) kann auf die obigen Ausführungen verwiesen werden.

Die vorliegende Erfindung wird anhand der nachfolgenden Beispiele eingehender beschrieben.

**Beispiele**

In den folgenden Beispielen und Vergleichsbeispielen wurde für das selektive Laserschmelzen folgendes Gerät verwendet: Concept Laser Mlab Cusing. Laser: Nd:YAG-Laser, Wellenlänge: 1,064 $\mu$m.

Beispiel 1

Es wurde eine wässrige Zusammensetzung, die Kupferpulver und Agar (d.h. ein Polysaccharid) als Feuchthaltemittel enthält, zubereitet. Die wässrige Zusammensetzung enthielt Wasser in einem Anteil von 29,5 Vol%. Bezogen auf das Wasser, lag das Feuchthaltemittel in einem Anteil von 1,7 Vol% vor.

Die wässrige Zusammensetzung wurde in dem Bauraum des Geräts in Form einer dünnen Schicht (Schichtdicke etwa 200-400 $\mu$m) auf die Bauplatte aufgebracht. Das Aufschmelzen des Metallpulvers in definierten Bereichen der aufgebrachten Schicht erfolgte bei Raumtemperatur. Als inertes Schutzgas im Bauraum wurde Argon verwendet. Bis zur Etablierung einer stabilen Schutzgasströmung dauerte es etwa 10 Minuten. Anschließend wurde der Laserschmelzschritt gestartet. Der Laserstrahl bewegte sich mit einer Geschwindigkeit von 5000 mm/s bei einer Strahlleistung von 95 W und einem Abstand benachbarter Linien von 1 $\mu$m über eine vordefinierte Fläche von 2 x 2 mm$^2$ der aufgebrachten Schicht der wässrigen Zusammensetzung.

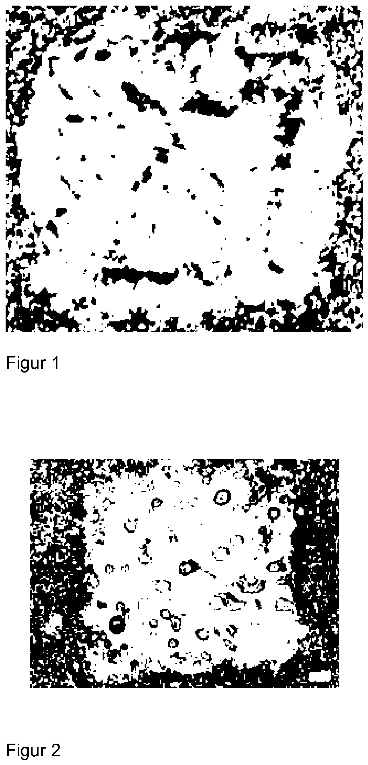

Von der vom Laserstrahl erfassten Fläche wurde eine mikroskopische Aufnahme gemacht. Diese Aufnahme zeigt Figur 1.

Die Aufnahme belegt, dass das Kupferpulver sehr effizient aufgeschmolzen wurde und das geschmolzene Kupfer die vom Laserstrahl erfasste Fläche nahezu vollständig bedeckt.

Vergleichsbeispiel 1

In Vergleichsbeispiel 1 wurde ein trockenes Kupferpulver verwendet. Das Kupferpulver entsprach dem in Beispiel 1 verwendeten Kupferpulver.

Das trockene Kupferpulver wurde in dem Bauraum des Geräts in Form einer dünnen Schicht (Schichtdicke etwa 200-400 $\mu$m) auf die Bauplatte aufgebracht. Das Aufschmelzen des Metallpulvers in definierten Bereichen der aufgebrachten Schicht erfolgte bei Raumtemperatur. Als inertes Schutzgas im Bauraum wurde Argon verwendet. Bis zur Etablierung einer stabilen Schutzgasströmung dauerte es etwa 10 Minuten. Anschließend wurde der Laserschmelzschritt gestartet. Der Laserstrahl bewegte sich mit einer Geschwindigkeit von 5000 mm/s bei einer Strahlleistung von 95 W und einem Abstand benachbarter Linien von 1 $\mu$m über eine vordefinierte Fläche von 2 x 2 mm$^2$ der aufgebrachten Schicht des trockenen Kupferpulvers.

Von der vom Laserstrahl erfassten Fläche wurde eine mikroskopische Aufnahme gemacht. Diese Aufnahme zeigt Figur 2.

Es kam zwar zu einem teilweisen Aufschmelzen des Cu-Pulvers, das geschmolzene Kupfer bedeckt jedoch in Form relativ kleiner Schmelztröpfchen nur einen geringen Teil der vom Laserstrahl erfassten Fläche.

Vergleichsbeispiel 2

In Vergleichsbeispiel 2 wurde eine wässrige Zusammensetzung verwendet, die ein Kupferpulver, jedoch kein Feuchthaltemittel enthielt. Zum Zeitpunkt ihrer Herstellung betrug der Wassergehalt der wässrigen Zusammensetzung 60 Vol%. Das Kupferpulver entsprach dem in Beispiel 1 verwendeten Kupferpulver.

Die Feuchthaltemittel-freie wässrige Zusammensetzung (Wassergehalt: 60 Vol%) wurde in dem Bauraum des Geräts in Form einer dünnen Schicht (Schichtdicke etwa 200-400 $\mu$m) auf die Bauplatte aufgebracht. Das Aufschmelzen des Metallpulvers in definierten Bereichen der aufgebrachten Schicht erfolgte bei Raumtemperatur. Als inertes Schutzgas im Bauraum wurde Argon verwendet. Bis zur Etablierung einer stabilen Schutzgasströmung dauerte es etwa 10 Minuten. Anschließend wurde der Laserschmelzschritt gestartet. Wie in Beispiel 1 bewegte sich der Laserstrahl mit einer Geschwindigkeit von 5000 mm/s bei einer Strahlleistung von 95 W und einem Abstand benachbarter Linien von 1 $\mu$m über eine vordefinierte Fläche von 2 x 2 mm$^2$ der aufgebrachten Schicht der Feuchthaltemittel-freien wässrigen Zusammensetzung.

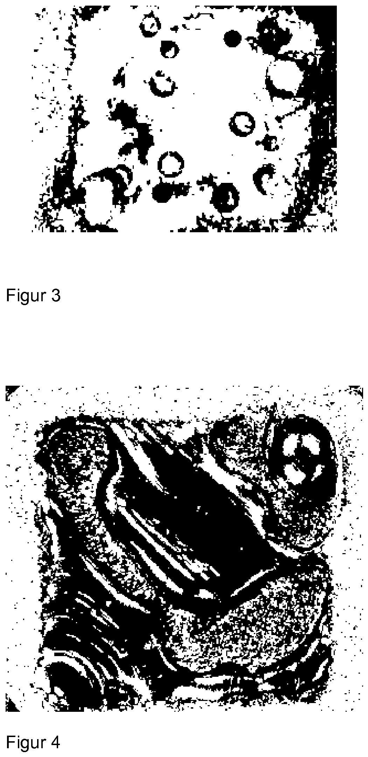

Von der vom Laserstrahl erfassten Fläche wurde eine mikroskopische Aufnahme gemacht. Diese Aufnahme zeigt Figur 3.

Es kam zwar zu einem teilweisen Aufschmelzen des Cu-Pulvers und die dabei gebildeten Schmelztröpfchen waren deutlich größer als die in Vergleichsbeispiel 1 erhaltenen Schmelztröpfchen. Allerdings bedecken die Schmelztröpfchen nur einen relativ geringen Teil der vom Laserstrahl erfassten Fläche.

Beispiel 2

Es wurde eine wässrige Zusammensetzung, die Kupferpulver und Glycerin als Feuchthaltemittel enthält, zubereitet. Die wässrige Zusammensetzung enthielt Wasser in einem Anteil von 5,2 Vol%. Bezogen auf das Wasser, lag das Feuchthaltemittel in einem Anteil von 42,5 Vol% vor. Das Kupferpulver entsprach dem in Beispiel 1 verwendeten Kupferpulver.

Die wässrige Zusammensetzung wurde in dem Bauraum des Geräts in Form einer dünnen Schicht (Schichtdicke etwa 100-200 $\mu$m) auf die Bauplatte aufgebracht. Das Aufschmelzen des Metallpulvers in definierten Bereichen der aufgebrachten Schicht erfolgte bei Raumtemperatur. Als inertes Schutzgas im Bauraum wurde Argon verwendet. Bis zur Etablierung einer stabilen Schutzgasströmung dauerte es etwa 10 Minuten. Anschließend wurde der Laserschmelzschritt gestartet. Der Laserstrahl bewegte sich mit einer Geschwindigkeit von 500 mm/s bei einer Strahlleistung von 95 W und einem Abstand benachbarter Linien von 10 $\mu$m über eine vordefinierte Fläche von 2 x 2 mm$^2$ der aufgebrachten Schicht der wässrigen Zusammensetzung.

Von der vom Laserstrahl erfassten Fläche wurde eine mikroskopische Aufnahme gemacht. Diese Aufnahme zeigt Figur 4.

Die Aufnahme belegt, dass das Kupferpulver sehr effizient aufgeschmolzen wurde und ein großer Teil der vom Laserstrahl erfassten Fläche durch das geschmolzene Kupfer bedeckt wurde.

Vergleichsbeispiel 3

In Vergleichsbeispiel 3 wurde ein trockenes Kupferpulver verwendet. Das Kupferpulver entsprach dem in Beispiel 1 verwendeten Kupferpulver.

Das trockene Kupferpulver wurde in dem Bauraum des Geräts in Form einer dünnen Schicht (Schichtdicke etwa 100-200 $\mu$m) auf die Bauplatte aufgebracht. Das Aufschmelzen des Metallpulvers in definierten Bereichen der aufgebrachten Schicht erfolgte bei Raumtemperatur. Als inertes Schutzgas im Bauraum wurde Argon verwendet. Bis zur Etablierung einer stabilen Schutzgasströmung dauerte es etwa 10 Minuten. Anschließend wurde der Laserschmelzschritt gestartet. Der Laserstrahl bewegte sich mit einer Geschwindigkeit von 500 mm/s bei einer Strahlleistung von 95 W und einem Abstand benachbarter Linien von 10 $\mu$m über eine vordefinierte Fläche von 2 x 2 mm$^2$ der aufgebrachten Schicht des trockenen Kupferpulvers.

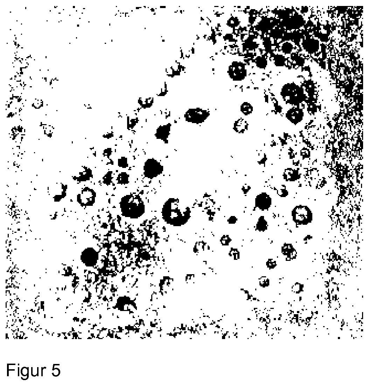

Von der vom Laserstrahl erfassten Fläche wurde eine mikroskopische Aufnahme gemacht. Diese Aufnahme zeigt Figur 5. Es kam zwar zu einem teilweisen Aufschmelzen des Cu-Pulvers, das geschmolzene Kupfer bedeckte jedoch in Form relativ kleiner Schmelztröpfchen nur einen geringen Teil der vom Laserstrahl erfassten Fläche.

Die Ergebnisse sind in der Tabelle 1 zusammengefasst.

Tabelle 1: Aufschmelzverhalten der schichtförmig auf die Bauplatte aufgebrachten Zusammensetzungen

|  | Auf die Bauplatte aufgebrachte Zusammensetzung | Zustand nach Laserstrahlbehandlung |
|---|---|---|
| Beispiel 1 | Wässrige Zusammensetzung mit Kupferpulver und einem Polysaccharid (Agar) als Feuchthaltemittel | Großer Teil der vom Laserstrahl erfassten Fläche durch das geschmolzene Kupfer bedeckt |
| Vergleichs-beispiel 1 | Trockenes Kupferpulver | Kleine Schmelztröpfchen, die nur einen relativ geringen Teil der vom Laserstrahl erfassten Fläche bedecken |

(fortgesetzt)

| | Auf die Bauplatte aufgebrachte Zusammensetzung | Zustand nach Laserstrahlbehandlung |
|---|---|---|
| **Vergleichs-beispiel 2** | Wässrige Zusammensetzung mit Kupferpulver, kein Feuchthaltemittel | Größere Schmelztröpfchen, die nur einen relativ geringen Teil der vom Laserstrahl erfassten Fläche bedecken |
| **Beispiel 2** | Wässrige Zusammensetzung mit Kupferpulver und Glycerin als Feuchthaltemittel | Großer Teil der vom Laserstrahl erfassten Fläche durch das geschmolzene Kupfer bedeckt |
| **Vergleichs-beispiel 3** | Trockenes Kupferpulver | Kleine Schmelztröpfchen, die nur einen relativ geringen Teil der vom Laserstrahl erfassten Fläche bedecken |

Wie die Beispiele der vorliegenden Erfindung belegen, führt die Anwesenheit eines Feuchthaltemittels sowohl im Vergleich mit einem wässrigen Medium, das kein Feuchthaltemittel enthält, als auch im Vergleich mit einem trockenen Metallpulver zu einem effizienteren Aufschmelzen des Metallpulvers. Dieser Effekt lässt sich sowohl für ein polymeres Feuchthaltemittel (Polysaccharid; Versuch 1) als auch für ein niedermolekulares Feuchthaltemittel (Glycerin; Versuch 2) beobachten.

**Patentansprüche**

1. Verwendung einer wässrigen Zusammensetzung, die ein Metallpulver und ein Feuchthaltemittel enthält, für die additive Fertigung eines metallischen Formkörpers durch Strahlschmelzen oder -sintern.

2. Verwendung nach Anspruch 1, wobei das Feuchthaltemittel eine Polyhydroxyverbindung, eine Mono- oder Polyalkoxyverbindung, eine Aminosäure oder ein Gemisch aus mindestens zwei dieser Verbindungen ist ist.

3. Verwendung nach Anspruch 2, wobei die Polyhydroxyverbindung Glycerin, ein Glycol, ein Zuckeralkohol, ein Polyalkylenglycol, ein Oligo- oder Polysaccharid oder ein Gemisch aus mindestens zwei dieser Verbindungen ist.

4. Verwendung nach einem der vorstehenden Ansprüche, wobei die wässrige Zusammensetzung das Wasser in einer Menge von 1 Vol% bis 50 Vol% enthält; und/oder wobei das Feuchthaltemittel in einer Menge von 0,1 bis 60 Vol%, bezogen auf das Wasser der wässrigen Zusammensetzung, vorliegt.

5. Verwendung nach einem der vorstehenden Ansprüche, wobei das Metall ein Edelmetall, ein Halbedelmetall (insbesondere Kupfer), ein Refraktärmetall, ein Leichtmetall (insbesondere Aluminium) oder eine Legierung oder eine intermetallische Phase eines dieser Metalle ist.

6. Verwendung nach einem der vorstehenden Ansprüche, wobei die wässrige Zusammensetzung außerdem ein Flussmittel enthält.

7. Verwendung nach Anspruch 6, wobei das Flussmittel ein Flussmittel zum Hartlöten gemäß DIN EN 1045:1997 ist.

8. Verwendung nach einem der vorstehenden Ansprüche, wobei das Strahlschmelzen oder Strahlsintern ein Laserstrahlschmelzen, ein Laserstrahlsintern, ein Elektronenstrahlschmelzen oder ein Elektronenstrahlsintern ist.

9. Ein Verfahren zur additiven Fertigung eines metallischen Formkörpers durch ein Strahlschmelzen oder Strahlsintern, umfassend

(i) Bereitstellen der wässrigen Zusammensetzung gemäß einem der Ansprüche 1-7 in Form einer Schicht S1 auf einem Substrat,
(ii) selektives Aufschmelzen oder Sintern des Metallpulvers in der Schicht S1 durch eine Strahlquelle,
(iii) nach dem Erstarren des aufgeschmolzenen oder gesinterten Metallpulvers Bereitstellen der wässrigen Zusammensetzung gemäß einem der Ansprüche 1-7 in Form einer weiteren Schicht S2 auf der zuvor bereitgestellten Schicht S1,

(iv) selektives Aufschmelzen oder Sintern des Metallpulvers in der weiteren Schicht S2 durch die Strahlquelle.

10. Verfahren nach Anspruch 9, wobei das Bereitstellen in Schritt (i) erfolgt, indem die wässrige Zusammensetzung auf dem Substrat aufgebracht wird und wobei nach dem Aufbringen der wässrigen Zusammensetzung auf dem Substrat ohne weitere Zwischenschritte der Schritt (ii) erfolgt.

11. Verfahren nach Anspruch 9, wobei das Bereitstellen in Schritt (i) erfolgt, indem die wässrige Zusammensetzung auf dem Substrat aufgebracht und anschließend einer Behandlung mit der Strahlquelle unterzogen wird, so dass ein Teil des Wassers verdampft, ein Aufschmelzen oder Sintern des Metallpulvers jedoch noch nicht stattfindet.

12. Verfahren nach Anspruch 9, wobei das Bereitstellen in Schritt (i) erfolgt, indem zunächst eine Schicht eines trockenen Metallpulvers auf dem Substrat aufgebracht und anschließend Wasser, das das Feuchthaltemittel enthält, der trockenen Pulverschicht zugegeben wird.

13. Eine wässrige Zusammensetzung, die ein Metallpulver und ein Feuchthaltemittel gemäß einem der Ansprüche 1-7 enthält.

Figur 1

Figur 2

Figur 3

Figur 4

Figur 5

**EP 3 479 927 A1**

| Europäisches Patentamt<br>European Patent Office<br>Office européen des brevets | **EUROPÄISCHER RECHERCHENBERICHT** | **Nummer der Anmeldung**<br>EP 17 20 0340 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WANG XINJIAN ET AL: "Fabrication of friction-reducing texture surface by selective laser melting of ink-printed (SLM-IP) copper (Cu) nanoparticles(NPs)", APPLIED SURFACE SCIENCE, Bd. 396, 2. November 2016 (2016-11-02), Seiten 659-664, XP029855614, ISSN: 0169-4332, DOI: 10.1016/J.APSUSC.2016.11.003 | 1-5,8-13 | INV.<br>B22F1/00<br>B22F3/105<br>B33Y70/00<br>B29C64/165 |
| Y | * Zusammenfassung *<br>* 1. Introduction, letzter Absatz, 2.1 SLM-IP Cu NPs *<br>* Abbildung 1 *<br>----- | 6,7 | |
| X | EP 3 181 271 A1 (SEIKO EPSON CORP [JP]) 21. Juni 2017 (2017-06-21) | 1,8,9, 11-13 | |
| Y | * Zusammenfassung *<br>* Absätze [0018], [0170], [0208], [0209], [0213] *<br>* Seiten 1-5 *<br>----- | 6,7 | |
| Y,D | US 2015/102016 A1 (BRUCK GERALD J [US] ET AL) 16. April 2015 (2015-04-16)<br>* Zusammenfassung *<br>* Absätze [0004] - [0014], [0036] - [0040] *<br>----- | 6,7 | **RECHERCHIERTE SACHGEBIETE (IPC)**<br>B22F<br>B33Y<br>B29C |
| Y | WO 2015/136360 A1 (LINCOLN GLOBAL INC [US]) 17. September 2015 (2015-09-17)<br>* Zusammenfassung *<br>* Absätze [0012], [0031], [0039] *<br>----- | 6,7 | |

Der vorliegende Recherchenbericht wurde für alle Patentansprüche erstellt

| Recherchenort | Abschlußdatum der Recherche | Prüfer |
|---|---|---|
| Den Haag | 19. April 2018 | Gomes Pinto F., R |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 17 20 0340

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-04-2018

| Im Recherchenbericht angeführtes Patentdokument | Datum der Veröffentlichung | Mitglied(er) der Patentfamilie | Datum der Veröffentlichung |
|---|---|---|---|
| EP 3181271 A1 | 21-06-2017 | CN 107097416 A<br>EP 3181271 A1<br>JP 2017110271 A<br>US 2017173688 A1 | 29-08-2017<br>21-06-2017<br>22-06-2017<br>22-06-2017 |
| US 2015102016 A1 | 16-04-2015 | KEINE | |
| WO 2015136360 A1 | 17-09-2015 | CN 106102990 A<br>DE 112015001264 T5<br>JP 2017512654 A<br>KR 20160132410 A<br>WO 2015136360 A1 | 09-11-2016<br>12-01-2017<br>25-05-2017<br>18-11-2016<br>17-09-2015 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9824574 A1
- US 20150102016 A1
- WO 2017037165 A1
- US 20100240864 A1

**In der Beschreibung aufgeführte Nicht-Patentliteratur**

- **D. HERZOG et al.** *Acta Materialia,* 2016, vol. 117, 371-392
- **M. MARKL et al.** *Schweißen und Schneiden,* 2017, vol. 69 (1-2), 30-39
- **M. NAEEM.** *Laser Technik Journal,* 10. Januar 2013, 18-20